(19) Europäisches Patentamt

European Patent Office

Office européen des brevets

(11) **EP 2 654 193 B1**

(12) **EUROPEAN PATENT SPECIFICATION**

(45) Date of publication and mention
of the grant of the patent:
**10.02.2016  Bulletin 2016/06**

(51) Int Cl.:
***H02N 2/06*** *(2006.01)*

(21) Application number: **12172139.3**

(22) Date of filing: **15.06.2012**

(54) **Driver for piezoelectric manipulator**

Antriebselement für piezoelektrischen Manipulator

Pilote pour manipulateur piézoélectrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2012  LV 120060**

(43) Date of publication of application:
**23.10.2013  Bulletin 2013/43**

(73) Proprietor: **Latvijas Universitate
1586 Riga (LV)**

(72) Inventors:
 • **Prikulis, Juris
   LV-1006 Riga (LV)**

 • **Poplausks, Raimonds
   LV-3898 Nigrandes novads (LV)**
 • **Meija, Raimonds
   LV-2105 Babites novads (LV)**
 • **Dzelme, Juris
   LV-1029 Riga (LV)**
 • **Erts, Donats
   LV-1050 Riga (LV)**

(74) Representative: **Fortuna, Aleksandra
Foral Patent Law Offices
P.O.Box 98
Riga 1050 (LV)**

(56) References cited:
**EP-A1- 1 622 249        WO-A1-2009/104830
US-A1- 2010 230 608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The invention relates to power conversion and shaping of electric signals. In particular, it allows efficient conversion of low voltage direct current power to high voltage and high current pulses suitable for driving piezoelectric manipulators and scanners.

Background Art

Piezoelectric manipulator is a piezoelectric device, which changes its shape depending on the applied voltage. Piezoelectrically driven inertial sliding for positioning various objects with micrometer and nanometer accuracy is a well-known method of mechanical manipulation. In particular, it has been successfully used for distance adjustment in scanning probe microscopes. Nevertheless, circuits for driving piezoelectric manipulators are still being developed [FLAXER, Eli. Multichannels high voltage programmable driver for piezoelectric transducer. Rev. Sci. Instrum. 2008, vol.79, no.3, p.035104]. The inertial sliding motion of a sample on a platform is achieved, when rapid voltage ramp applied to the piezoelectric device accelerates the platform faster than the breaking achievable by the static frictional force. If voltage change is applied at slower rate, no sliding occurs and the sample moves monotonously with respect to applied voltage, apart from hysteresis and creep of the piezoelectric device. This is referred as scan mode of motion. The platform is considered to be a rigid body with a flat surface. The normal force required for friction breaking of the sample can either originate from a force field or be established directly, e.g., using elastic springs.

The frictional force should be strong enough in piezoelectric manipulation systems, in order to prevent sliding while work is being done during scanning mode of operation.

Typically piezoelectric manipulators operate at high voltages (approx. 200V) and are regulated by means of linear amplifier in order to provide both motion modes, inertial and scan. The applied voltage in inertial mode is usually of sawtooth shape, which provides alternating intervals of high and low voltage derivatives. However, the sawtooth shape and the method of generating the signal are not optimal in terms of energy consumption. In addition the sample travels large excursions during the waveform cycle to achieve modest net displacement.

The linear amplifier usually is an operational amplifier with additional high-power output stage and feedback loop, which ensures the linearity of the system. Piezoelectric manipulators typically have a large internal capacitance (> 1 nF), which together with high operating voltages require strong electric current from the driver amplifier, since the inertial slip motion occurs only at rapid changes of the applied voltage. In practice linear high voltage amplifiers for piezoelectric manipulator applications dissipate too much power to be used with portable batteries and are built as grid powered instruments which also include means for sufficient cooling.

In order to use piezoelectric manipulator in controlled gas environment or vacuum it should be placed in a pressure sealed container and electrical contact to the driving circuit established using feed-through connectors. Consequently, manipulators with multiple degrees of freedom require multiple feed-through connections. In cases when piezoelectric manipulator systems need to be repeatedly inserted and removed from the container through a pressure evacuation chamber, feed-through electrical connections can be impractical or economically not feasible. The traditional piezoelectric manipulator drivers, which contain linear high voltage amplifiers, cannot operate from compact batteries long enough for practical use, as already in quiescent mode they consume relatively large electric power.

A known circuit without linear amplifiers, although designed for other purposes, is capable to drive piezoelectric device in scan mode using portable batteries (EP 1622249). However, it does not have the means to ramp up the voltage of the piezoelectric device fast enough to overcome friction and cause sliding for inertial motion in conditions required practical manipulation systems.

There is also a known piezoelectric device driver circuit (WO2009104830), which utilizes pulse width modulation (PWM) technique to achieve desired voltage at the piezoelectric device. This circuit also cannot ramp up the voltage at required rate since the PWM relies on effective low-pass filtering. In addition, even if a constant applied voltage value is required, the periodic nature of the PWM signal causes current flow and energy loss in the low-pass filter comprising the piezoelectric element itself.

The problem of unnecessary energy loss also persists in the case when step size in inertial mode of motion is controlled by the output signal amplitude of linear amplifiers, which typically run at constant supply voltage. In addition, linear amplifiers consume power also in quiescent mode.

Another known circuit exists for driving piezoelectric manipulator in inertial mode without a linear amplifier (EP2110940), which uses a full field effect transistor bridge powered from single polarity power source and regulates the driving speed by means of variable duty cycle of periodic control signals or the value of the protective resistor. Although the known device reduces heating of the piezoelectric element by dissipating the energy in the protective resistor, it does not reduce the total power consumption. It also has no means to generate signals suitable for scan mode of motion.

A principal shortcoming of mentioned known circuits is that the ratio of energy stored in the internal capacitance of the piezoelectric element and the energy dissipated in the series resistor is significantly lower than what can be achieved.

There is also known a controlling device of inertial slider according to US 2010/230608 A1.

Disclosure of the Invention

The invention aims to reduce energy consumption in piezoelectric manipulator driver circuit in order to enable autonomous operation of piezoelectric manipulator using small power source and wireless control system for applications in hermetically sealed volumes, such as controlled gas mixture, vacuum or regulated temperature conditions.

The proposed driver for piezoelectric manipulator, which can operate both in inertial and scanning modes of motion, contains two-stage voltage converters and a transistor bridge circuit with a pulse length limiter, which, together with the internal capacity of the piezoelectric device provides necessary voltage waveform for inertial sliding. The device also provides means for operating piezoelectric devices in scanning mode.

The driver circuit consists of a primary energy source, two DC voltage boost converters, communications module, microcontroller, transistor bridge circuit with pulse width limiters and a switch module. The primary source of energy is a non-stabilized low-voltage electrical energy source, which through two voltage converters (primary and secondary) is electrically connected to the transistor bridge, which is equipped with a pulse width limiter, which creates voltage waveform, necessary for inertial sliding, wherein time-dependency of voltage on the piezoelectric element electrodes is being determined by shunt resistors with one terminal connected to the ground potential of the system, while the other terminal to the electrode of the piezoelectric element. The primary voltage converter using power of a primary energy source provides the entire circuit with stabilized supply voltage. The secondary voltage converter containing a gated pulse generator, which drives the voltage boost circuit, which comprises a transistor switch, a transformer, which generates high voltage pulses and is connected to a diode bridge, and a capacitor C1, resistors R1 and R2, which form voltage divider at the input of a comparator, which switches off pulse generator with $SE$ signal when the capacitor C1 is charged to desired voltage level and reduces voltage of the capacitor C1 if $SR$ voltage is reduced in order to allow gradual regulation of $UHP$ voltage in scanning mode and the transistors bridge contains metal oxide semiconductor field effect transistors (MOSFET) with insulated gate and induced channel.

Brief Description of Drawings

Fig.1 - block diagram of the driver for piezoelectric manipulator.;
Fig.2 - circuit diagram of the secondary DC/DC converter;
Fig.3 - circuit diagram of the MOSFET bridge with pulse width limiter.

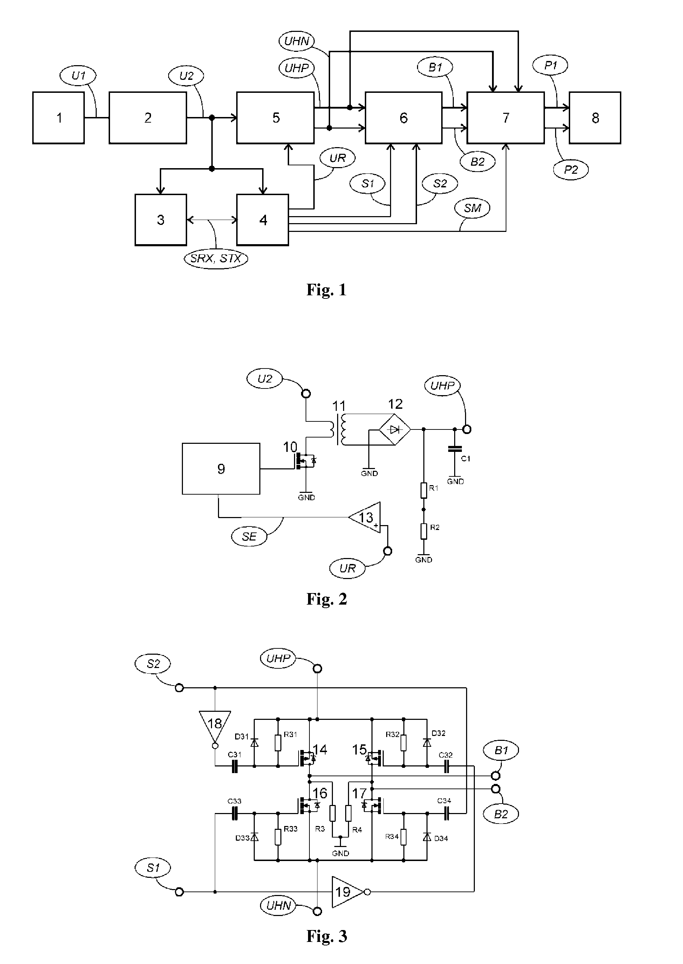

In detail, the proposed device contains a primary power source 1, a primary DC boost converter 2, a communications module 3, a microcontroller unit 4, a secondary DC voltage boost converter 5, a full field effect transistor bridge 6, a switch module 7, a piezoelectric manipulator 8, a gated pulse generator 9 (Fig. 2), a transistor switch 10, a transformer 11, a diode bridge 12, a comparator 13, transistors 14, 15 being MOSFET with induced "p" channel (Fig. 3), transistors 16, 17 being MOSFET with induced "n" channel, invertors 18, 19.

The proposed device consists of a number of electrically connected units as shown in Fig. 1. The primary power source 1, e.g. battery, produces unstabilized voltage $U1$ and is connected to the primary DC boost converter 2, which generates stabilized voltage U2, which in turn is used to power the communications module 3, the microcontroller unit 4 and the secondary DC voltage boost converter 5. The blocks 2, 3, 4 and 5 are mutually electrically connected. The communications module 3 is adapted to be interfaced with a remote control system, such as optical or radio frequency transmitter. Data between the microcontroller unit 4 and the communications module 3 can be sent and received using discrete signals $SRX$ and $STX$. The microcontroller 4 is adapted to receive commands from the communications module 3 and generate discrete control signals $S1, S2$ for the transistor bridge circuit 6 and the discrete signal $SM$ to the switch module 7, discrete signals $SRX$ and $STX$ to the communications module 3, as well as continuous voltage signal $UR$ for the secondary DC voltage boost converter 5. In such configuration the microcontroller unit 4 generates necessary signals for switching between scanning and inertial sliding mode and defines inertial step length. The secondary DC voltage boost converter is adapted to produce variable positive and negative high value voltages $UHP$ and $UHN$ necessary for operation of the piezoelectric manipulator. These voltages are electrically connected with the transistor bridge circuit 6 and the switch module 7. The high voltage levels can be regulated at will using digital to analogue converter inside the microcontroller unit 4, which produces a setpoint voltage $UR$. The full field effect transistor bridge 6 with pulse width limiter is electrically connected to the secondary DC voltage boost converter 5, the switch module 7 and the microcontroller unit 4 and can produce large current pulses to rapidly charge the internal capacity of the piezoelectric element and cause inertial sliding. Voltage and current can be delivered to a capacitive load in desired polarity since the transistor bridge is fully symmetrical and connected to positive and negative supply *UHP* and *UHN*. The switch module 7 is electrically connected with the transistors bridge circuit 6, the secondary DC voltage boost converter 5, the microcontroller unit 4 and the piezoelectric manipulator 8. The switch module 7 is not required if the device is used in inertial sliding mode or scanning mode only. The switch module 7 allows switching over inertial sliding and scanning mode and is adapted for supplying high voltage signals *UHP* and *UHN* or the bridge 6 output signals *B1* and *B2* to the piezoelectric manipulator 8 electrodes *P1* and *P2*. Inertial or scanning operation mode is selected by controlling the switch module 7 by *SM* signal generated by the microcontroller unit 4. The piezoelectric manipulator 8 is connected to the switch module 7. If the device is used only in inertial sliding mode, the piezoelectric manipulator 8 can be connected to the full field effect transistor bridge 6 without using the switch module 7. The gated pulse generator 9 generates a voltage pulse for controlling the transistor switch 10. The transistor switch 10 turns the current on and off in the transformer's 11 primary winding, which is connected to the output electrode. The transformer 11 is designed to induce high voltage in the secondary winding, which is connected to the diode bridge 12, which rectifies the induced voltage into the desired polarity DC and charges the capacitor C1. The comparator 13 is adapted to compare output voltage value of the secondary DC voltage boost converter 5 with the value of the setpoint voltage *UR*. The output signal of the comparator 13 is connected to the input of the gated pulse generator 9 and stops pulse generation when the setpoint voltage is reached. The transistors 14, 15 with induced "p" channel (Fig. 3) are connected to the piezoelectric manipulator 8 through the switch module 7. In inertial sliding mode only one channel of the transistors 14, 15 is being open. Thus positive voltage *UHP* is being applied to only one electrode *P1* or *P2* of the piezoelectric element. The transistors 16, 17 with induced "n" channel are being connected to the piezoelectric manipulator 8 through the switch module 7. They apply negative voltage *UHN* to one of the piezoelectric manipulator 8 electrodes. The inverters 18, 19 are adapted for processing control signals providing the transistors 14, 15 with induced "p" channel voltage polarity and amplitude. The described bridge circuit ensures that voltage pulses are supplied to the piezoelectric element electrodes *P1* and *P2* in desired direction and are always of opposite polarity.

In following the energy consumption during inertial slider operation will be discussed. Existing known linear amplifier or asymmetric duty cycle based piezoelectric manipulator controllers have a fixed voltage source, followed by a resistance R connected in series with the internal capacitance C of the piezoelectric device. Resistance of switching elements, protection elements, cabling, and the series resistance of the piezoelectric device itself contribute to the total value of R.

Operation of the mentioned known circuits achieves inertial sliding motion by rapid charging of the capacity to a voltage level $U_C$. In order to reduce the step size the $U_C$ value is reduced while keeping the supply voltage value U constant.

The ratio between energy $W_R$ that is lost in the resistance and energy $W_C$ that accumulates in the internal capacity of the piezoelectric device can be expressed by equation:

$$\frac{W_R}{W_C} = 2\frac{U}{U_C} - 1$$

Thus, in order to reduce the losses, the internal capacity of the piezoelectric device must be maximally charged, approaching the theoretical limit $U_C \to$ U. Consequently, for optimal use of energy, in case of reduced step size also the supply voltage should be reduced.

In many applications of piezoelectric manipulators e.g. in scanning probe microscopy it is necessary to regulate the inertial step size in a large displacement range.

The achievable energy saving is most prominent in cases when manipulation is mainly done using small step sizes and full swing is applied only occasionally, which is a typical usage when objects should be moved with micrometer or nanometer accuracy and initial alignment with maximum step size is done within few minutes, and fine operation with minimum step takes several hours. For instance, if $U_C$ is 10 times smaller than U, the energy dissipated in heat is 19 times greater than the energy accumulated in the internal capacity of the piezoelectric device.

Such application scenario is typical in high precision nanopositioning systems, where initial alignment with maximum step size is done within few minutes, and fine operation with minimum step takes several hours.

Apart from being generally desired property, reduced energy consumption minimizes problems associated with thermal stability, particularly in cryogenic systems.

In order to reduce the dissipated power, this invention contains a secondary voltage converter whose output voltage can be adjusted in wide range and the internal capacity during inertial motion always gets fully charged to the stationary state.

A schematic diagram of the secondary DC voltage boost converter is shown in Fig. 2. It contains a gated pulse generator 9, which can be enabled or disabled by a logic *SE* signal. The pulse generator 9 controls a conventional voltage boost circuit consisting of a MOSFET switch 10 in combination with a transformer 11, which generates high voltage peaks each time the current in the primary coil undergoes a sudden change. The output of the transformer after rectification by a diode bridge 12 charges a capacitor C1, which is significantly larger than the internal capacitance of the piezoelectric manipulator. The voltage across the capacitor C1 determines the step size in inertial mode of motion. This voltage can be controlled at will by setting a *UR* voltage using a digital to analog converter on the microcontroller unit. The resistors R1 and R2 serve two purposes in this application. First, they provide voltage scaling for the comparator 13, which disables the pulse generator once desired output level is reached. Second, they discharge the capacitor C1 if *SR* is reduced. This allows gradual change of *UHP* as required in the scan mode of operation.

Resistances of R1 and R2 are selected so as the dissipated power would be sufficiently small (a few milliwatts), and the time constant $\tau=(R1+R2)C1$ is sufficiently small (around one second) for scanning mode of operation.

A negative output *UHN* boost converter, with the same amplitude as *UHP* is generated and controlled essentially the same way as shown in Fig 2, except for opposite polarity of the rectifier bridge and connection of the comparator.

Use of bipolar outputs enables fully symmetric generation of high voltage pulses to the piezoelectric device in both polarities and relaxation to zero voltage state after completion of the pulse. The charge from the capacitor in the secondary voltage boost converter is delivered to the piezoelectric device through a full MOSFET bridge, shown in detail in Fig. 3. It differs from traditional transistor bridge circuits, by the additional diode, resistor and capacitor network at each MOSFET gate, which ensures that the transistors are in high impedance state at all times, except a short interval after rising step of *S1* or *S2* signals.

In following detailed operation of the bridge is discussed, when piezoelectric element 8 is connected to the bridge output terminals *B1* and *B2* and transistors 14 and 15 are MOSFET with induced p channel, while 16 and 17 have induced n channel. At the initial conditions the internal capacity of the piezoelectric device is fully discharged through resistors R3 and R4. Signals *S1* and *S2* also have ground potential. Resistors R31, R32, R33, and R34 ensure that the gate-source voltage of all transistors is also zero, and consequently no current is allowed to flow through the drain electrodes.

At the moment when *S1* signal is switched to logic "1", sufficient positive gate-source voltage reaches the transistor 16 through capacitor C33 and current is allowed to flow through the drain terminal. Consequently terminal *B1* is effectively connected to the negative supply voltage *UHN*.

A moment later, caused by the delay in inverter 19 a negative gate-source voltage reaches the transistor 15 through capacitor C32 and high current is allowed to flow through both transistors 15 and 16 until the terminal *B2* is charged to the positive supply voltage level *UHP*. By the above steps the internal capacity of the piezoelectric device is very rapidly charged to voltage *UHP-UHN.* This voltage ramp causes sudden displacement of the platform and inertial sliding of the sample.

After time interval defined by the values of C33, R33, and C32, R32, the gate potentials of transistors 15 and 16 reduce and their channels return to high impedance state. Thereafter the internal capacity of the piezoelectric element discharges through resistors R3 and R4 until both terminals of the bridge reach ground potential.

The resistor values R3 and R4 are chosen sufficiently large, in order to discharge the piezoelectric device at a slow rate, which causes no sliding. During the discharge phase also the *S1* signal returns to zero and capacitors C32 and C33 charge to the initial state through the diodes D32 and D33. At this stage the platform has reached its equilibrium state and has zero velocity. The sample is also at rest although with finite net displacement.

In a similar fashion opposite polarity voltage ramp to the level *UHN-UHP* on the piezoelectric device and reverse motion of sample can be triggered by rising of the control signal *S2*. In this case the acting elements are inverter 18, transistors 14 and 17 and pulse width limiters consisting of C31, R31, D31 and C34, R34, D34. The net displacement is controlled by the level of the supply voltages of the bridge circuit *UHN* and *UHP*. After completion of the inertial step the voltage on the piezoelectric device is zero and is not influenced by variation of the supply voltage.

Examples of Implementation of the Invention

The circuit can be assembled from commercially available components on a printed circuit board using well established soldering methods. A low voltage (approximately 2-6 V) compact battery, for instance 3.6 V Li ion rechargeable cell can serve as a primary energy source 1. The Primary DC boost converter 2 can be one of many commercially available converters which are commonly used in portable electronic devices. The output voltage from this converter (approximately 7 - 10 V) ensures optimal operation of the transistor switch 10 for generation of short current pulses in the secondary DC voltage boost converter 5 as well as provides supply voltage for logic elements. The communications module 3 can be either optical, e.g. infrared remote control receiver or a radio frequency transceiver. Microcontroller 4 is a small-power general-purpose microcontroller with a sufficient number of output signals for support of signals *S1,*

*S2, SM, UR, SRX*, and *STX*. Miniature (only few mm across) transformers, suitable for high voltage generation in the secondary DC voltage boost converter 5 are available commercially, and are common in handheld photoflash devices. The output voltage of the secondary DC voltage boost converter can be regulated from 0 to over $\pm$ 100 V. By selection of components with higher voltage rating the output range can be extended further. The transistor bridge 6 can be assembled from commercially available MOSFET transistors 14, 15, 16, 17 e.g. power devices with approximately 250 V voltage rating and 15 A current rating. The switch module 7 can be assembled from latching relays, which do not consume power after switching to any position. The piezoelectric manipulator 8 for instance can be a piezoelectric tube scanner commonly used in scanning probe microscopes with internal capacity of approximately 3 nF, which is much smaller than the value 1000 nF of capacitor C1 in the secondary DC voltage boost converter. The shunt resistor value of 470 kOhm together with 3 nF internal capacity of the piezoelectric device yields time constant of approximately 1 ms. This allows to use the step repetition rate up to few hundreds of Hz. Above mentioned numerical parameters are provided as examples and are not limiting the applicability of this invention. Larger or smaller values can be achieved by selection of components with appropriate rating and scaling of time determining elements.

The diode rectifier 12 can be assembled from general purpose diodes with sufficient voltage rating. Te comparator 13, as well as inverters 18, 19 are general-purpose electronic components, that are compatible with the logical signal levels used throughout the circuit.

The invention enables autonomous operation of piezoelectric manipulators for extended periods of time in pressure sealed volumes, such as controlled gas mixture, vacuum or temperature regulated chambers, where feed-through connections are impractical. The solution has additional advantages compared to existing drivers of piezoelectric manipulators, namely, during inertial motion the displacement of said piezoelectric device is unidirectional and the system relaxes to zero velocity after completion of the inertial step, which using above numerical parameters takes about 1 ms.

**Claims**

1. A controlling device for control of piezoelectric manipulator in inertial sliding and scanning mode, containing two DC voltage boost converters (2) and (5), a communications module (3), a microcontroller unit (4), a transistor bridge (6) and a switch module (7) being adapted for connecting the piezoelectric manipulator controlling device with piezoelectric manipulator (8) electrodes (*P1*, *P2*) and is adapted for switching the controlling device between inertial sliding and scanning mode, wherein the device is adapted to be electrically connected with primary power source (1), which through the DC boost converter (2) can be electrically connected with the communications module (3), microcontroller unit (4) and through the DC boost converter (5) is connected with the transistor bridge circuit (6), which is provided with pulse length limiter and is electrically connected with the switch module (7), wherein the transistor bridge (6) contains resistors (R3, R4), which one output is connected with zero potential of the piezoelectric manipulator controlling device, and the second output - with respective electrode (*P1*, *P2*) of the piezoelectric manipulator (8), hereto the microcontroller unit (4) is adapted for switching the device between inertial sliding and scanning mode, as well as defining inertial step length.

2. The device according to claim 1, **characterized in that** the resistor (R3, R4) values are chosen so to be able to provide slow discharge of the internal capacitance of the piezoelectric device, and the transistor bridge (6) contains transistors (14, 15, 16, 17) being field-effect transistors with insulated gate and induced channel.

3. The device according to claims 1 or 2, **characterized in that** the microcontroller unit (4) is adapted for receiving commands from the communications module (3) and generate a discrete control signals (*S1*, *S2*) for the full field effect transistor bridge circuit (6), as well as discrete signal (*SM*) for switching module (7), discrete signals *(SRX* and *STX)* for the communications module (3), and analogue signal (*UR*) for the secondary DC voltage boost converter (5).

4. The device according to any of the preceding claims, **characterized in that** the secondary DC voltage boost converter (5) contains:

   - a gated pulse generator (9), which is adapted for controlling the voltage boosting circuit and a transistor switch (10),
   - a transformer (11), which is adapted to a high voltage pulse generation and is connected with diode bridge (12) and capacitor C1,
   - the resistances R1 and R2, forming voltage divider at a comparator's (13) input, the comparator (13) being adapted for switching off pulse generator by the enable signal (*SE*), when the capacitor C1 is charged and for capacitor C1 voltage reduction, if the reference voltage (*SR*) is reduced to allow gradual adjustment of the positive high voltage (*UHP*) value in scanning mode.

**Patentansprüche**

1. Ein Steuergerät für die Steuerung des piezoelektrischen Manipulators im trägen Gleit- und Abtastmodus, bestehend aus zwei DC-Spannungserhöhungswandlern (2) und (5), einem Kommunikationsmodul (3), einem Mikrocontroller (4), einer Transistorbrücke (6) und einem Schaltermodul (7) für den Anschluss des piezoelektrischen Manipulatorsteuergeräts mit piezoelektrischem Manipulator (8) Elektroden (P1, P2) und für die Schaltung des Steuergeräts zwischen dem trägen Gleit- und Abtastmodus vorbereitet wird, wobei das Gerät so ausgelegt ist, dass es elektrisch an die primäre Energiequelle (1) angeschlossen werden kann, die durch den DC-Boost-Wandler (2) elektrisch mit dem Kommunikationsmodul (3), dem Mikrocontroller (4) und über den DC-Boost-Wandler (5) mit der Transistorbrücke (6) verbunden werden kann, welche mit einem Impulslängenbegrenzer ausgerüstet und elektrisch mit dem Schaltermodul (7) verbunden ist, wobei die Transistorbrücke (6) die Widerstände (R3, R4) enthält und ein Ausgang mit dem Nullpotential des piezoelektrischen Manipulatorsteuergeräts und der zweite Ausgang mit der jeweiligen Elektrode (P1, P2) des piezoelektrischen Manipulators (8) verbunden ist, wozu der Mikrocontroller (4) zum Umschalten des Geräts zwischen dem trägen Gleit- und Abtastmodus sowie für das Definieren der Trägheitsschrittlänge vorbereitet wird.

2. Die Vorrichtung nach Anspruch 1, ist **dadurch gekennzeichnet, dass** die Widerstandswerte (R3, R4) so gewählt sind, dass eine langsame Entladung der internen Kapazität des piezoelektrischen Geräts möglich ist und die Transistorbrücke (6) die Transistoren (14, 15 , 16, 17) in Form von Feldeffekttransistoren mit isoliertem Gate und induziertem Kanal enthält.

3. Die Vorrichtung gemäß einem der Ansprüche 1 oder 2 ist **dadurch gekennzeichnet, dass** der Mikrocontroller (4) für den Empfang von Befehlen des Kommunikationsmoduls (3) vorbereitet ist und diskrete Steuersignale (S1, S2) für die gesamte Feldeffekttransistor-Brückenschaltung (6), diskrete Signale (SM) für das Schaltermodul (7), diskrete Signale (SRX und STX) für das Kommunikationsmodul (3) und ein Analogsignal (UR) für den sekundären Gleichspannungserhöhungswandler (5) generieren kann.

4. Das Gerät gemäß einem der vorhergehenden Ansprüche ist **dadurch gekennzeichnet, dass** der sekundäre Gleichspannungserhöhungswandler (5) Folgendes enthält:

   - einen gattergesteuerten Impulsgenerator (9), der für die Steuerung der Spannungserhöhungsschaltung und einen Transistorschalter (10) vorbereitet ist,
   - einen Transformator (11), der für eine Hochspannungsimpulserzeugung vorbereitet und mit der Diodenbrücke (12) und dem Kondensator Cl verbunden ist,
   - die Widerstände R1 und R2, die Spannungsteiler (13) am Eingang des Komparators bilden, wobei der Komparator (13) zum Abschalten des Impulsgenerators durch das Freigabesignal (SE) vorbereitet ist, wenn der Kondensator Cl aufgeladen und an die Spannungsverringerung des Kondensators Cl angepasst wird, falls die Referenzspannung (SR) reduziert wird, so dass eine schrittweise Anpassung der positiven Hochspannung (UHP) Wert im Abtastmodus möglich ist.

**Revendications**

1. Dispositif de commande permettant de commander un manipulateur piézoélectrique dans un mode de glissement inertiel et de balayage, contenant deux convertisseurs élévateurs de tension continue (2) et (5), un module de communications (3), une unité de microcontrôleur (4), un pont transistorisé (6) et un module de commutation (7) étant conçu pour connecter le dispositif de commande de manipulateur piézoélectrique aux électrodes (*P1, P2*) du manipulateur piézoélectrique (8) et qui est conçu pour commuter le dispositif de commande entre un mode de glissement inertiel et de balayage, où le dispositif est conçu pour être connecté électriquement à une source d'alimentation primaire (1), qui, par le biais du convertisseur élévateur CC (2), peut être connectée électriquement au module de communications (3), à l'unité de microcontrôleur (4) et par le biais du convertisseur élévateur CC (5) est connectée au circuit de pont transistorisé (6), qui est pourvu d'un limiteur de longueur d'impulsion et est connectée électriquement au module de commutation (7), dans lequel le pont transistorisé (6) contient des résistances (R3, R4), dont une sortie est connectée au potentiel zéro du dispositif de commande de manipulateur piézoélectrique, et la seconde sortie - à l'électrode respective (*P1, P2*) du manipulateur piézoélectrique (8), l'unité de microcontrôleur (4) étant conçue pour commuter le dispositif entre le mode de glissement inertiel et de balayage, ainsi que pour définir la longueur d'étape inertielle.

2. Dispositif selon la revendication 1, **caractérisé en ce que** les valeurs des résistances (R3, R4) sont choisies de façon à pouvoir fournir une décharge lente de la capacité interne du dispositif piézoélectrique, et le pont transistorisé (6) contient des transistors (14, 15, 16, 17) qui sont des transistors à effet de champ avec une grille isolée et un canal induit.

3. Dispositif selon la revendication 1 ou 2, **caractérisé en ce que** l'unité de microcontrôleur (4) est conçue pour recevoir des commandes de la part du module de communications (3) et générer des signaux de commande discrets (*S1*, *S2*) pour le circuit de pont transistorisé à effet de champ complet (6), ainsi qu'un signal discret (*SM*) pour le module de commutation (7), des signaux discrets (*SRX* et STX) pour le module de communications (3), et un signal analogique (UR) pour le convertisseur élévateur de tension continue secondaire (5).

4. Dispositif selon l'une quelconque des revendications précédentes, **caractérisé en ce que** le convertisseur élévateur de tension continue secondaire (5) contient :

   - un générateur d'impulsions à déclenchement périodique (9), qui est conçu pour commander le circuit élévateur de tension et un commutateur à transistor (10),
   - un transformateur (11), qui est conçu pour une génération d'impulsions à haute tension et est connecté au pont de diodes (12) et au condensateur CI,
   - les résistances R1 et R2, formant un diviseur de tension au niveau d'une entrée du comparateur (13), le comparateur (13) étant conçu pour mettre hors tension le générateur d'impulsions par le signal d'activation (SE), lorsque le condensateur CI est chargé et pour une réduction de tension du condensateur CI, si la tension de référence (*SR*) est réduite pour permettre un réglage progressif de la valeur de la haute tension positive (*UHP*) en mode de balayage.

**Fig. 1**

**Fig. 2**

**Fig. 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1622249 A
- WO 2009104830 A
- EP 2110940 A
- US 2010230608 A1

### Non-patent literature cited in the description

- **FLAXER, ELI.** Multichannels high voltage programmable driver for piezoelectric transducer. *Rev. Sci. Instrum.,* 2008, vol. 79 (3